# EUROPEAN PATENT APPLICATION

(11) **EP 4 230 709 A1**
(43) Date of publication of application: **23.08.2023**
(21) Application number: 21880214.8
(22) Date of filing: 15.10.2021
(51) Int. Cl.: C09K 17/02, C09K 17/14, C09K 101/00, C05C 13/00, A01G 7/00

(54) **METHOD FOR MANUFACTURING ORGANIC FERTILIZER, METHOD FOR CULTIVATING PLANT, METHOD FOR IMPROVING SOIL, AND APPARATUS FOR MANUFACTURING ORGANIC FERTILIZER**

(30) Priority: 16.10.2020 JP 2020174739
(71) Applicant: Kyushu University, National University Corporation, Nishi-ku Fukuoka-shi Fukuoka 819-0395 (JP)
(72) Inventor: ATTRI Pankaj, Fukuoka-shi, Fukuoka 819-0395 (JP); KOGA Kazunori, Fukuoka-shi, Fukuoka 819-0395 (JP); SHIRATANI Masaharu, Fukuoka-shi, Fukuoka 819-0395 (JP)
(74) Representative: EP&C
(86) International application number: PCT/JP2021/038171
(87) International publication number: WO 2022/080479

(57) **Abstract**

A method for manufacturing a nitrogen-enriched organic fertilizer includes a step of treating an organic fertilizer with nitrogen plasma. Further, a method for cultivating a plant includes a step of manufacturing a nitrogen-enriched organic fertilizer by the manufacturing method; and a step of cultivating a plant in soil fertilized with the nitrogen-enriched organic fertilizer. In addition, a method for improving soil includes a step of manufacturing a nitrogen-enriched organic fertilizer by the manufacturing method; and a step of fertilizing the soil with the organic fertilizer. An apparatus for manufacturing a nitrogen-enriched organic fertilizer includes a plasma generation unit; a nitrogen gas supply unit that supplies nitrogen gas to the plasma generation unit; and an organic fertilizer-holding unit that holds the organic fertilizer, in which the organic fertilizer held by the organic fertilizer-holding unit is irradiated with nitrogen plasma generated by the plasma generation unit.

## Description

### [Technical Field]

The present invention relates to a method for manufacturing an organic fertilizer, a method for cultivating a plant, a method for improving soil, and an apparatus for manufacturing an organic fertilizer.

Priority is claimed on Japanese Patent Application No. 2020-174739, filed October 16, 2020, the content of which is incorporated herein by reference.

### [Background Art]

In recent years, there has been growing interest in organic farming as a form of farming with a low environmental impact. In organic farming, organic fertilizers are used instead of chemical fertilizers. It has been reported that inorganic nitrogen in organic fertilizers is released into the environment over time (Non-Patent Document 1). Therefore, organic fertilizers may lack nitrogen content, resulting in insufficient crop growth.

Conventionally, the Haber-Bosch method has been used as a nitrogen fixation method. In the Haber-Bosch method, methane reacts with water and oxygen to synthesize hydrogen, and the hydrogen reacts with nitrogen to synthesize ammonia. In the Haber-Bosch method, methane contained in natural gas and the like is used, and the reaction is carried out under conditions of high temperature and high pressure. Therefore, a large amount of fossil fuels are consumed. Therefore, the Haber-Bosch method has a problem of high environmental impact.

In addition, when chemical fertilizers are added to organic fertilizers to enrich the nitrogen content, because of the use of chemical fertilizers, the Haber-Bosch method does not meet the definition of organic farming.

As a nitrogen fixation method without using the Haber-Bosch method, a method of irradiating water with nitrogen plasma has been proposed. For example, Patent Document 1 proposes irradiating water with nitrogen plasma to manufacture a nutrient solution containing a nitrogen source and using the nutrient solution in a plant cultivation system.

### [Citation List]

### [Patent Document]

[Patent Document 1]
Japanese Unexamined Patent Application, First Publication No. 2017-228423

### [Non-Patent Document]

[Non-Patent Document 1]
Jana E Compton and Richard D. Boone, Soil nitrogen transformation and the role of light fraction organic matter in forest soils. Soil Biology and Biochemistry 34(7):933-943.

### [Summary of Invention]

### [Technical Problem]

The plant cultivation system of Patent Document 1 is a hydroponics system and cannot be applied to organic farming. For use in organic farming, it is required to improve the component composition of organic fertilizers without adding chemical fertilizers.

Accordingly, an object of the present invention is to provide a method and an apparatus for manufacturing a nitrogen-enriched organic fertilizer which can enrich the nitrogen content of an organic fertilizer without using chemical fertilizers. Another object of the present invention is to provide a method for cultivating a plant and a method for improving soil using the organic fertilizer manufactured by the manufacturing method or the manufacturing apparatus.

### [Solution to Problem]

The present invention includes the following aspects.
[1] A method for manufacturing a nitrogen-enriched organic fertilizer, including: a step of treating an organic fertilizer with nitrogen plasma.
[2] The method according to [1], in which the enriched nitrogen content is at least one selected from the group consisting of ammonia, nitric acid, nitrous acid, urea, and ions thereof.
[3] The method according to [1] or [2], in which the organic fertilizer contains vegetable compost.
[4] A method for cultivating a plant, including: a step of manufacturing a nitrogen-enriched organic fertilizer by the method according to any one of [1] to [3]; and a step of cultivating a plant in soil fertilized with the nitrogen-enriched organic fertilizer.
[5] A method for improving soil, including: a step of manufacturing a nitrogen-enriched organic fertilizer by the method according to any one of [1] to [3]; and a step of fertilizing the soil with the nitrogen-enriched organic fertilizer.
[6] An apparatus for manufacturing a nitrogen-enriched organic fertilizer, including: a plasma generation device; a nitrogen-containing gas supply unit configured to supply nitrogen-containing gas to a plasma generation space of the plasma generation device; and an organic fertilizer-holding unit configured to hold an organic fertilizer, in which the organic fertilizer held by the organic fertilizer-holding unit is irradiated with nitrogen plasma generated by the plasma generation device.
[7] The apparatus for manufacturing a nitrogen-enriched organic fertilizer according to [6], further including: a mixing mechanism configured to mix the organic fertilizer.

### [Advantageous Effects of Invention]

According to the present invention, a method and an apparatus for manufacturing a nitrogen-enriched organic fertilizer which can enrich the nitrogen content of an organic fertilizer without using chemical fertilizers are provided. In addition, a method for cultivating a plant and a method for improving soil using the organic fertilizer manufactured by the manufacturing method or the manufacturing apparatus are provided.

### [Brief Description of Drawings]

FIG. 1 is a schematic diagram showing an example of an apparatus for manufacturing a nitrogen-enriched organic fertilizer.
FIG. 2 is a schematic diagram showing a modification example of the apparatus for manufacturing a nitrogen-enriched organic fertilizer.
FIG. 3 is a schematic diagram showing a modification example of the apparatus for manufacturing a nitrogen-enriched organic fertilizer.
FIG. 4 shows a schematic diagram of an apparatus for manufacturing an organic fertilizer used in Example 1.
FIG. 5 shows a schematic diagram of an apparatus for manufacturing an organic fertilizer used in Example 2.
FIG. 6 shows a principle diagram of the apparatus for manufacturing an organic fertilizer of FIG. 5.
FIG. 7 shows the results of a cultivation test of white radish sprouts in an example.

### [Description of Embodiments]

Hereinafter, embodiments of the present invention will be described in detail with reference to the drawings according to the circumstances. In the drawings, the same or corresponding parts will be denoted by the same or corresponding reference numerals, and overlapping descriptions will be omitted. The dimensional ratios in each drawing are exaggerated for explanation and do not necessarily match the actual dimensional ratios.

### [Method for manufacturing organic fertilizer]

In Embodiment 1, the present invention provides a method for manufacturing a nitrogen-enriched organic fertilizer including a step of treating an organic fertilizer with nitrogen plasma.

### <Nitrogen plasma treatment step>

"Organic fertilizer" means a fertilizer made from organic matter as a raw material. Organic fertilizers contain organic matter, preferably organic matter as a main component (for example, an organic matter content of 50% by mass or more, preferably 60% by mass or more). Exemplary examples of organic fertilizers include special fertilizers stipulated in the Fertilizer Control Law that use organic matter as raw materials, and fertilizers produced by farmers using organic materials such as agricultural waste and livestock waste as raw materials, such as organic fertilizers and sludge compost stipulated in the official specifications of the Fertilizer Control Law. Specific exemplary examples of organic fertilizers include, but are not limited to, fish compost such as fish meal powder, fish fillet powder, dried fish fertilizer powder, and simmered dried fish; oil cakes such as rapeseed oil cakes and soybean cakes; bone meal made by removing fat, gelatin, and the like from animal bones and pulverizing the remaining bones; dry fungal fertilizer; cow compost, pig compost, poultry compost such as chicken compost, fermented chicken compost, and dried chicken compost; methane fermentation residue; vegetable compost such as rice husk compost, pruned branch compost, rice straw compost, bark compost, and humus; sludge compost; and garbage compost.

As the organic fertilizer, it is preferable to use one having a lower nitrogen content than other nutrients (phosphorus, potassium). As the organic fertilizer, for example, vegetable compost is preferable, and humus is more preferable. "Vegetable compost" means compost made from plant-derived organic materials. "Compost" means fertilizer in which easily decomposable organic matter is decomposed by microorganisms. "Humus" means compost made from leaf litter.

"Nitrogen plasma treatment" means bringing an object to be treated into contact with nitrogen plasma. "Plasma" means a group of particles (ionized gas) that are almost electrically neutral as a whole, including charged particles in which the molecules that make up the gas are separated into positive (cations) and negative (electrons) by ionization. "Nitrogen plasma" means plasma generated by ionizing nitrogen gas (N₂).

Nitrogen plasma can be generated by applying a voltage to a nitrogen-containing gas. The nitrogen plasma may be one generated under atmospheric pressure (atmospheric pressure plasma) or one generated under pressure lower than atmospheric pressure (low-pressure plasma).

A method for generating atmospheric pressure plasma is not particularly limited, and a known method can be used. Exemplary examples of methods for generating atmospheric pressure plasma include dielectric barrier discharge (DBD), inductively coupled plasma discharge (ICP), capacitively coupled plasma discharge (CCP), hollow cathode discharge, corona discharge, streamer discharge, glow discharge, and arc discharge.

The gas to which the voltage is applied may be any gas containing nitrogen (N₂) (nitrogen-containing gas). The nitrogen-containing gas may be nitrogen gas or a mixed gas of nitrogen gas and other gas. The mixed gas may be, for example, a mixed gas of nitrogen (N₂) and oxygen (O₂). The proportion of nitrogen in the mixed gas of nitrogen and oxygen is preferably 70 to 90% as volume fraction. Air may be used as the nitrogen-containing gas.

The supply amount of nitrogen-containing gas is not particularly limited, but is preferably 0.1 to 1000 mL/min, more preferably 1 to 500 mL/min, and even more preferably 10 to 100 mL/min.

A known plasma generation device can be used without particular limitation for generating nitrogen plasma. Nitrogen plasma can be generated in a known plasma generation device by using a nitrogen-containing gas as a gas to which a voltage is applied. Voltage application conditions are not particularly limited, and can be selected according to the type of plasma generation device. In the case of low-pressure plasma, for example, atmospheric pressure of 20 to 200 Pa, frequency of 50 to 500000 kHz, power of 10 to 100 W, and the like can be mentioned. In the case of atmospheric pressure plasma, for example, the frequency is 5 to 20000 kHz and the voltage is 5 to 20 kV.

The method of bringing organic fertilizer into contact with nitrogen plasma is not particularly limited. Exemplary examples of a method for bringing organic fertilizer into contact with nitrogen plasma include a method of blowing a plasma jet of nitrogen plasma into organic fertilizer, and a method in which organic fertilizer is put into a chamber in which electrodes are arranged, voltage is applied while supplying a nitrogen-containing gas, and nitrogen plasma is generated in the chamber.

The treatment time of the organic fertilizer with nitrogen plasma is not particularly limited, and may be appropriately adjusted depending on the type of plasma generation device, the nitrogen concentration in the nitrogen-containing gas, the type and treatment amount of the organic fertilizer, and the like. For example, when treating 1 to 200 g of organic fertilizer (for example, humus) with nitrogen plasma by low-pressure plasma, exemplary examples of the treatment time include 1 to 30 minutes, 2 to 15 minutes, 2 to 10 minutes, and 3 to 5 minutes. For example, when treating 1 to 10 g of organic fertilizer (for example, humus) with nitrogen plasma by DBD plasma, exemplary examples of the treatment time include 1 to 30 minutes, 2 to 20 minutes, 3 to 15 minutes, or 5 to 10 minutes.

By treating the organic fertilizer with nitrogen plasma, ionized nitrogen molecules react with water (H₂O) in the organic fertilizer to generate nitrogen compounds such as inorganic nitrogen compounds (ammonia, nitric acid, nitrous acid, ions thereof, and the like) and organic nitrogen compounds (urea, ions thereof, and the like). Therefore, a nitrogen-enriched organic fertilizer can be obtained. "Nitrogen-enriched organic fertilizer" means organic fertilizer with increased nitrogen content compared to untreated organic fertilizer. The enriched nitrogen content is typically inorganic nitrogen compounds and urea. Examples of inorganic nitrogen compounds include ammonia, nitric acid, nitrous acid, and ions thereof. The amount of increase in nitrogen content can be adjusted by the nitrogen plasma treatment time. The nitrogen-enriched organic fertilizer may, for example, contain 1.1 times or more, 1.2 times or more, 1.3 times or more, 1.4 times or more, or 1.5 times or more nitric acid and nitrate ions in molarity than untreated organic fertilizer. The nitrogen-enriched organic fertilizer may, for example, contain 1.1 times or more, 1.2 times or more, 1.3 times or more, 1.4 times or more, 1.5 times or more, 1.6 times or more, 1.8 times or more, 2 times or more, or 2.3 times or more nitrous acid and nitrite ions in molarity than untreated organic fertilizer.

In the manufacturing method of the present embodiment, water in the organic fertilizer reacts with nitrogen plasma to generate inorganic nitrogen compounds and nitrogen compounds such as urea. Therefore, the organic fertilizer preferably contains water. The water content in the organic fertilizer to be subjected to nitrogen plasma treatment is, for example, preferably 1 to 5000 mg/g, more preferably 1 to 2000 mg/g, even more preferably 1 to 1000 mg/g. When the organic fertilizer has a low water content, water may be added to the organic fertilizer prior to plasma treatment.

After the nitrogen plasma treatment, the organic fertilizer may be mixed or stirred such that the nitrogen content in the organic fertilizer becomes uniform.

According to the manufacturing method of the present embodiment, a nitrogen-enriched organic fertilizer can be obtained by a simple method without using chemical fertilizers. The obtained organic fertilizer can be used in organic farming. The obtained organic fertilizer has an enriched nitrogen content, and thus it is possible to grow crops well.

### [Method for cultivating plant]

According to Embodiment 1, the present invention provides a method for cultivating a plant, including: a step of manufacturing an organic fertilizer with an enriched nitrogen content by the manufacturing method (hereinafter referred to as "step A1"); and a step of cultivating a plant in the soil fertilized with the nitrogen-enriched organic fertilizer (hereinafter referred to as "step B1").

### <Step of manufacturing nitrogen-enriched organic fertilizer: step A1>

Step A1 is the same as the manufacturing method described above. Through step A1, a nitrogen-enriched organic fertilizer can be obtained.

### <Step of cultivating plant: step B1>

In step B1, a plant is cultivated in the soil fertilized with the nitrogen-enriched organic fertilizer manufactured in step A1. The soil fertilized with the organic fertilizer is not particularly limited. The soil may be paddy field, field, orchard, or horticultural soil. The fertilization method is not particularly limited, and can be performed in the same manner as ordinary organic fertilizers. The timing of applying the organic fertilizer is also not particularly limited. Fertilization can be performed as appropriate depending on the type of plant, growing conditions, soil conditions, and the like.

There are no particular limitations on the plants that are cultivated in soil fertilized with organic fertilizer. The plants may be appropriately selected according to the type of soil. Exemplary examples of plants include, but are not limited to, grains, vegetables, fruit trees, and flowering plants. A plant can be cultivated by a known method depending on the type of plant.

In the method for cultivating plants according to the present embodiment, the plants are cultivated using the nitrogen-enriched organic fertilizer, and thus the plants grow well. In addition, since no chemical fertilizer is used, this method can be applied to organic farming.

### [Method for improving soil]

According to Embodiment 1, the present invention provides a method for improving soil, including: a step of manufacturing a nitrogen-enriched organic fertilizer by the manufacturing method (hereinafter referred to as "step A2"); and a step of fertilizing the soil with the nitrogen-enriched organic fertilizer (hereinafter referred to as "step B2").

### <Step of manufacturing nitrogen-enriched organic fertilizer: step A2>

Step A2 is the same as the manufacturing method described above. Through step A2, a nitrogen-enriched organic fertilizer can be obtained.

### <Step of fertilizing soil: step B2>

In step B2, the soil is fertilized with the nitrogen-enriched organic fertilizer manufactured in step A2. The soil is not particularly limited as long as the soil is suitable for cultivating plants, and may be paddy field, field, orchard, or horticultural soil. The fertilization method is not particularly limited, and can be performed in the same manner as ordinary organic fertilizers.

In the soil improvement method of the present embodiment, since the nitrogen-enriched organic fertilizer is used, an appropriate nitrogen content can be supplied to the soil together with other nutrients contained in the organic fertilizer. Therefore, it is possible to prepare soil in which plants grow well.

In the above plant cultivation method or soil improvement method, the nitrogen content in the organic fertilizer manufactured in step A1 or step A2 may be released from the organic fertilizer over time, and the nitrogen content of the organic fertilizer may decrease. Therefore, it is preferable that the time from step A1 or step A2 until the soil is fertilized be as short as possible. After step A1 or step A2, the time until the soil is fertilized is, for example, preferably within 10 days, more preferably within 5 days, even more preferably within 3 days, and particularly preferably within 1 day. After step A1 or step A2, in order to shorten the time until the soil is fertilized, step A1 or step A2 is preferably performed near the soil to be fertilized. For example, step A1 or step A2 can be performed within the same farm site as the soil to be fertilized.

### [Apparatus for manufacturing nitrogen-enriched organic fertilizer]

According to Embodiment 1, the present invention provides an apparatus for manufacturing a nitrogen-enriched organic fertilizer (hereinafter referred to as "apparatus for manufacturing an organic fertilizer"), including: a plasma generation unit; a nitrogen gas supply unit that supplies nitrogen gas to the plasma generation unit; and an organic fertilizer-holding unit that holds the organic fertilizer, in which the organic fertilizer held by the organic fertilizer-holding unit is irradiated with nitrogen plasma generated by the plasma generation unit.

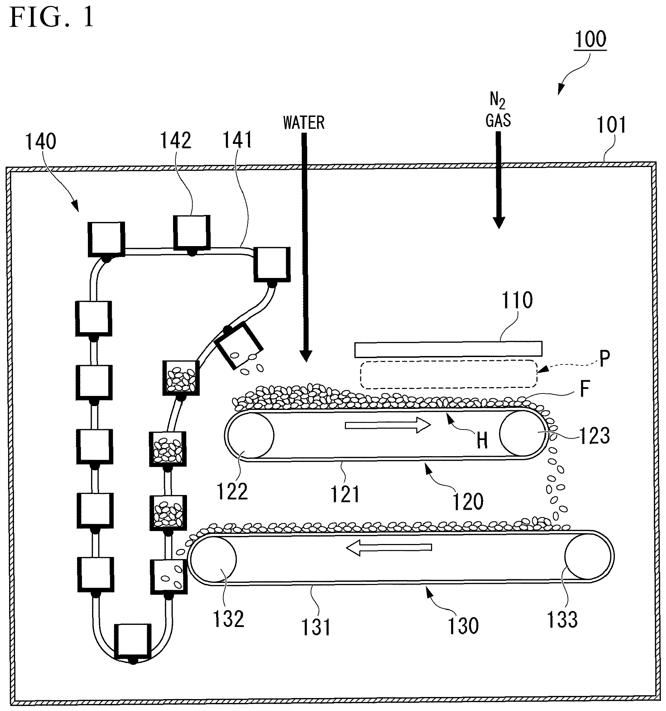

An apparatus for manufacturing an organic fertilizer of the present embodiment will be described with reference to FIG. 1. FIG. 1 shows an example of the apparatus for manufacturing an organic fertilizer of the present embodiment.

An apparatus for manufacturing an organic fertilizer 100 shown in FIG. 1 includes a plasma-generating electrode 110, an upper belt conveyor 120, a lower belt conveyor 130, and a bucket conveyor 140 inside a housing 101.

The plasma-generating electrode 110 is connected to a power supply (not shown) outside the housing 101, and constitutes a plasma generation device together with the power supply. A known plasma generation device can be used without particular limitation. For example, when the plasma generation device is a low-pressure plasma generation device, a known plasma electrode made of copper, tungsten, or the like can be used as the plasma-generating electrode 110, and a pulse power supply or a high-frequency power supply can be used as the power supply. When the plasma generation device is an atmospheric pressure plasma generation device, a known DBD plasma dielectric can be used as the plasma-generating electrode 110, and a high-voltage power supply can be used as the power supply.

A nitrogen-containing gas is supplied into the housing 101 from a nitrogen-containing gas supply unit configured by a nitrogen-containing gas supply passage (not shown), and the nitrogen-containing gas is supplied to a plasma generation space P. When the voltage is applied to the plasma-generating electrode 110 in this state, nitrogen plasma is generated in the plasma generation space P. The nitrogen-containing gas supply unit may be composed of a nitrogen-containing gas supply source (such as a nitrogen-containing gas cylinder) installed outside the housing 101, a nitrogen-containing gas supply port installed within the housing 101, and a nitrogen-containing gas supply pipe for connecting the nitrogen-containing gas supply source and the nitrogen-containing gas supply port. The apparatus for manufacturing an organic fertilizer 100 may include an exhaust device for discharging the gas inside the housing 101 and adjusting the atmospheric pressure inside the housing 101.

The upper belt conveyor 120 is installed below the plasma generation space P of the plasma generation device. The upper belt conveyor 120 is composed of an endless belt 121 and rollers 122 and 123. A part of the upper belt conveyor 120 facing the plasma-generating electrode 110 constitutes an organic fertilizer-holding unit H (nitrogen plasma irradiation region). The upper belt conveyor 120 conveys an organic fertilizer F in the direction of the white arrow in the drawing. The organic fertilizer F conveyed to the organic fertilizer-holding unit H is irradiated with the nitrogen plasma generated in the plasma generation space P. The organic fertilizer F irradiated with nitrogen plasma is conveyed to the end portion (right end portion in the drawing) of the upper belt conveyor 120 and falls onto the lower belt conveyor 130.

The lower belt conveyor 130 is installed below the upper belt conveyor 120. The lower belt conveyor 130 is composed of the endless belt 131 and the rollers 132 and 133. The lower belt conveyor 130 is arranged such that the end portion (right end portion in the drawing) of the upper belt conveyor 120 where the organic fertilizer F falls is positioned above the belt of the lower belt conveyor 130. As a result, the organic fertilizer F that drops from the end portion of the upper belt conveyor 120 is received by the lower belt conveyor 130. The lower belt conveyor 130 conveys the organic fertilizer F in the direction of the white arrow in the drawing (opposite to the conveying direction of the upper belt conveyor 120). The organic fertilizer F is conveyed to the end portion of the lower belt conveyor 130 (left end portion in the drawing) and transferred into a bucket 142 of the bucket conveyor 140.

The bucket conveyor 140 is installed beside the upper belt conveyor 120 and the lower belt conveyor 130. The bucket conveyor 140 is composed of a plurality of buckets 142 and an endless belt 141 that conveys the buckets 142. The bucket conveyor 140 receives the organic fertilizer F falling from the end portion (left end portion in the drawing) of the lower belt conveyor 130 with the bucket 142, conveys the organic fertilizer F upward, and drops the organic fertilizer F onto the endless belt 121 of the upper belt conveyor 120.

An example of the operation of the apparatus for manufacturing an organic fertilizer 100 having the configuration as described above will be described.

First, the organic fertilizer F is put into the housing 101 from an organic fertilizer inlet (not shown). The organic fertilizer F may be thrown in so as to be placed on the endless belt 121 of the upper belt conveyor 120 or on the endless belt 131 of the lower belt conveyor 130, or may be put into the plurality of buckets 142 of the lower belt conveyor 130.

Next, a nitrogen-containing gas is supplied into the housing 101 from the nitrogen-containing gas supply passage (not shown). At this time, the gas inside the housing 101 may be exhausted by the exhaust device (not shown) to adjust the atmospheric pressure inside the housing 101. For example, when the plasma generation device including the plasma-generating electrode 110 and the power supply is a low-pressure plasma device, the pressure inside the housing 101 is preferably adjusted to 20 to 200 Pa. When the plasma generation device is an atmospheric pressure plasma device, the pressure inside the housing 101 is preferably adjusted to the atmospheric pressure.

Next, the upper belt conveyor 120 is operated to convey the organic fertilizer F placed on the endless belt 121 of the upper belt conveyor 120 to the organic fertilizer-holding unit H. Here, when the plasma-generating electrode 110 is applied, nitrogen plasma is generated in the plasma generation space P, and the organic fertilizer F existing in the organic fertilizer-holding unit H is irradiated with the nitrogen plasma. At this time, the ionized nitrogen molecules in the nitrogen plasma react with water (H₂O) in the organic fertilizer F to generate nitrogen compounds such as inorganic nitrogen compounds (ammonia, nitric acid, nitrous acid, ions thereof, and the like) and organic nitrogen compounds (urea, ions thereof, and the like). The generated nitrogen compound remains in the organic fertilizer F, and the nitrogen content of the organic fertilizer F is enriched.

The organic fertilizer F that has been irradiated with nitrogen plasma in the organic fertilizer-holding unit H is conveyed to the end portion (right end portion in the drawing) of the upper belt conveyor 120 and dropped onto the endless belt 131 of the lower belt conveyor 130. The organic fertilizer F dropped onto the lower belt conveyor 130 is dropped into the plurality of buckets 142 of the bucket conveyor 140 when conveyed to the end portion (left end portion in the drawing) of the lower belt conveyor 130. When the bucket conveyor 140 receives the organic fertilizer F from the lower belt conveyor 130, the bucket conveyor 140 may be temporarily stopped until a certain amount of the organic fertilizer F accumulates in the bucket 142. The bucket conveyor 140 may be controlled by a contact sensor or the like installed on bucket 142. Alternatively, stop and operation may be repeated at regular intervals.

The bucket 142 that has received the organic fertilizer F is conveyed upward by the bucket conveyor 140, and when the bucket 142 reaches the upper belt conveyor 120, the organic fertilizer F is released onto the endless belt 121. The organic fertilizer F released onto the endless belt 121 is conveyed again to the organic fertilizer-holding unit H and irradiated with nitrogen plasma.

In the apparatus for manufacturing an organic fertilizer 100, the upper belt conveyor 120, the lower belt conveyor 130, and the bucket conveyor 140 constitute an organic fertilizer-conveying unit. The organic fertilizer-conveying unit composed of the upper belt conveyor 120, the lower belt conveyor 130, and the bucket conveyor 140 forms a circulation path, and the organic fertilizer F circulates through this circulation path. The organic fertilizer F is irradiated with nitrogen plasma while passing through the organic fertilizer-holding unit H on the circulation path, and the nitrogen content is enriched. Further, since the organic fertilizer F is mixed during circulation, the concentration of nitrogen compounds generated in the organic fertilizer-holding unit H becomes uniform. Therefore, the upper belt conveyor 120, the lower belt conveyor 130, and the bucket conveyor 140 constitute a mixing mechanism for mixing the organic fertilizer F. The number of times the organic fertilizer F is circulated is not particularly limited, and can be appropriately set according to the amount of the organic fertilizer and the desired nitrogen enrichment amount. The number of circulation times can be, for example, approximately 1 to 20 times.

After the organic fertilizer F has been circulated a desired number of times, the organic fertilizer is taken out from an organic fertilizer outlet (not shown) to obtain the nitrogen-enriched organic fertilizer.

### <Modification example 1>

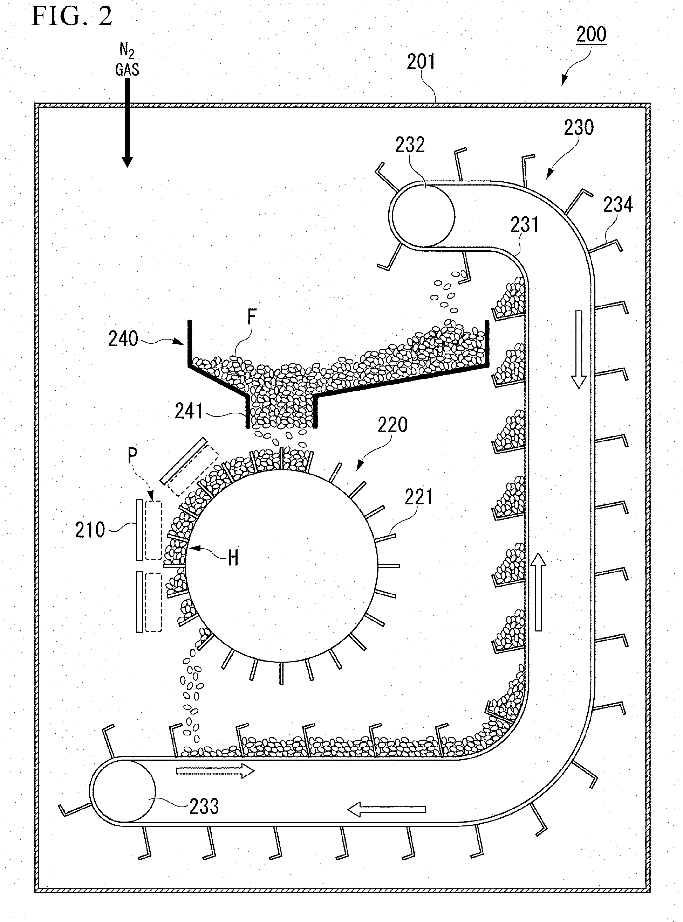

FIG. 2 shows a modification example of the apparatus for manufacturing an organic fertilizer of the present embodiment.

An apparatus for manufacturing an organic fertilizer 200 shown in FIG. 2 includes a plasma-generating electrode 210, a rotating body 220, a flight conveyor 230, and a tank 240 inside a housing 201.

The plasma-generating electrode 210 is connected to a power supply (not shown) outside the housing 201, and constitutes a plasma generation device together with the power supply. The plasma generation device is the same as the plasma generation device in the apparatus for manufacturing an organic fertilizer 100 described above. Although three plasma-generating electrodes 210 are shown in FIG. 2, the number of plasma-generating electrodes 210 is not limited to this, and any number of the plasma-generating electrodes 210 can be installed.

A nitrogen-containing gas is supplied into the housing 201 from the nitrogen-containing gas supply unit configured by a nitrogen-containing gas supply passage (not shown), and the nitrogen-containing gas is supplied to the plasma generation space P. When the voltage is applied to the plasma-generating electrode 210 in this state, nitrogen plasma is generated in the plasma generation space P. The apparatus for manufacturing an organic fertilizer 200 may include an exhaust device for discharging the gas inside the housing 201 and adjusting the atmospheric pressure inside the housing 201.

The rotating body 220 is installed to face the plasma-generating electrode 210. The rotating body 220 has a plurality of plates 221, and the organic fertilizer F can be held by the plates 221. A part of the rotating body 220 facing the plasma-generating electrode 210 constitutes the organic fertilizer-holding unit H (nitrogen plasma irradiation region). The rotating body 220 rotates counterclockwise to receive the organic fertilizer F discharged from an opening portion 241 of the tank 240 and convey the organic fertilizer F to the organic fertilizer-holding unit H. The organic fertilizer F conveyed to the organic fertilizer-holding unit H is irradiated with the nitrogen plasma generated in the plasma generation space P. The organic fertilizer F irradiated with nitrogen plasma is conveyed downward by the rotation of the rotating body 220 and dropped onto the flight conveyor 230.

The flight conveyor 230 receives the organic fertilizer F falling from the rotating body 220 and conveys the organic fertilizer F to the tank 240. The flight conveyor 230 is composed of an endless belt 231, rollers 232 and 233, and a plurality of flights 234. The flight conveyor 230 has a horizontal conveying unit that receives and horizontally conveys the organic fertilizer F falling from the rotating body 220, and a vertical conveying unit that vertically conveys the organic fertilizer F to the tank 240 installed above the rotating body 220. The flight 234 is bent such that the tip end portion faces upward in the vertical conveying unit to make it possible for the organic fertilizer to be sufficiently held in the vertical conveying unit. The flight conveyor 230 conveys the organic fertilizer F in the direction of the white arrow in the drawing. The flight conveyor 230 receives the organic fertilizer F dropped from the rotating body 220, conveys the organic fertilizer F to the tank 240, and releases the organic fertilizer F into the tank 240.

The tank 240 is positioned above the rotating body 220 and has the opening portion 241 at the bottom portion. The bottom portion of the tank 240 slopes toward the opening portion 241. The organic fertilizer F released into the tank 240 from the flight conveyor 230 moves toward the opening portion 241 by its own weight along the slope of the bottom portion of the tank 240 and is released from the opening portion 241 onto the rotating body 220. The tank 240 may include an opening/closing plate that allows the opening portion 241 to be opened and closed. In this case, when a certain amount of organic fertilizer is stored in the tank 240, the opening portion 241 may be opened to release the organic fertilizer F onto the rotating body 220.

An example of the operation of the apparatus for manufacturing an organic fertilizer 200 having the configuration as described above will be described.

First, the organic fertilizer F is put into the housing 201 from the organic fertilizer inlet (not shown). The organic fertilizer F is preferably put into the tank 240. The opening portion 241 of the tank 240 may be closed by an opening/closing plate (not shown) when the organic fertilizer F is put in.

Next, a nitrogen-containing gas is supplied into the housing 201 from the nitrogen-containing gas supply passage (not shown). At this time, similarly to the apparatus for manufacturing an organic fertilizer 100, the gas inside the housing 201 may be discharged by the exhaust device (not shown) to adjust the atmospheric pressure inside the housing 201.

Next, the organic fertilizer F is released from the opening portion 241 onto the rotating body 220. Next, the rotating body 220 is rotated to convey the organic fertilizer F to the organic fertilizer-holding unit H. Here, when the plasma-generating electrode 210 is applied, nitrogen plasma is generated in the plasma generation space P, and the organic fertilizer F existing in the organic fertilizer-holding unit H is irradiated with the nitrogen plasma. At this time, the ionized nitrogen molecules in the nitrogen plasma react with water (H₂O) in the organic fertilizer F to generate nitrogen compounds such as inorganic nitrogen compounds (ammonia, nitric acid, nitrous acid, ions thereof, and the like) and organic nitrogen compounds (urea, ions thereof, and the like). The generated nitrogen compound remains in the organic fertilizer F, and the nitrogen content of the organic fertilizer F is enriched.

The organic fertilizer F irradiated with nitrogen plasma in the organic fertilizer-holding unit H is conveyed to the lower portion of the rotating body 220 and dropped onto the flight conveyor 230. The organic fertilizer F dropped onto the flight conveyor 230 is conveyed to the tank 240 by the flight conveyor 230 and released into the tank 240 again.

In the apparatus for manufacturing an organic fertilizer 200, the rotating body 220, the flight conveyor 230, and the tank 240 constitute an organic fertilizer-conveying unit. The organic fertilizer-conveying unit composed of the rotating body 220, the flight conveyor 230, and the tank 240 forms a circulation path, and the organic fertilizer F circulates through this circulation path. The organic fertilizer F is irradiated with nitrogen plasma while passing through the organic fertilizer-holding unit H on the circulation path, and the nitrogen content is enriched. Since the organic fertilizer F is mixed during circulation, the concentration of nitrogen compounds generated in the organic fertilizer-holding unit H becomes uniform. Therefore, the rotating body 220, the flight conveyor 230, and the tank 240 constitute a mixing mechanism for mixing the organic fertilizer F. The number of times the organic fertilizer F is circulated is not particularly limited, and can be appropriately set according to the amount of the organic fertilizer and the desired nitrogen enrichment amount. The number of circulation times can be, for example, approximately 1 to 20 times.

After the organic fertilizer F has been circulated a desired number of times, the organic fertilizer F is taken out from the organic fertilizer outlet (not shown) to obtain the nitrogen-enriched organic fertilizer.

### <Modification example 2>

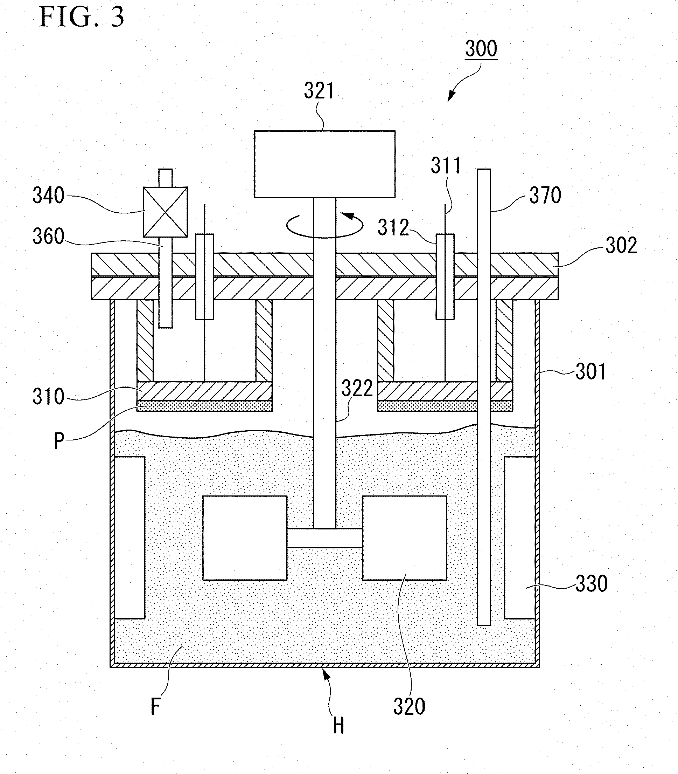

FIG. 3 shows another modification example of the apparatus for manufacturing an organic fertilizer of the present embodiment.

An apparatus for manufacturing an organic fertilizer 300 shown in FIG. 3 includes a plasma-generating electrode 310, a stirring fin 320, and a stirring baffle plate 330 in a housing 301 having a lid 302. An exhaust pipe 360 and a supply pipe 370 are provided to pass through the lid 302.

The housing 301 has the lid 302 such that the organic fertilizer F can be held inside. In the apparatus for manufacturing an organic fertilizer 300, the housing 301 constitutes the organic fertilizer-holding unit H (nitrogen plasma irradiation region). The organic fertilizer F can be put in and taken out in a state where the lid 302 is open. The housing 301 may be provided with a lift or the like (not shown) such that the organic fertilizer F can be easily put in and taken out.

The plasma-generating electrode 310 is installed on the housing 301 side of the lid 302. The plasma-generating electrode 310 is connected to the power supply (not shown) outside the housing 301 via an electric wire 311, and together with the power supply and the electric wire 311, constitutes the plasma generation device. The plasma generation device is the same as the plasma generation device in the apparatus for manufacturing the organic fertilizer 100 described above. Although two plasma-generating electrodes 310 are shown in FIG. 3, the number of plasma-generating electrodes 310 is not limited to this, and any number of the plasma-generating electrodes 310 can be installed. The electric wire 311 is inserted into the housing 301 from an electric wire insertion unit 312 provided on the lid 302 and connected to the plasma-generating electrode 310.

The supply pipe 370 is connected to the nitrogen-containing gas supply source (nitrogen-containing gas cylinder or the like) (not shown) to supply the nitrogen-containing gas into the housing 301. In the apparatus for manufacturing an organic fertilizer 300, the supply pipe 370 constitutes the nitrogen-containing gas supply unit. The nitrogen-containing gas supplied from the supply pipe 370 into the housing 301 also reaches the plasma generation space P in the vicinity of the plasma-generating electrode 310, and the plasma generation space P is supplied with the nitrogen-containing gas. When the voltage is applied to the plasma-generating electrode 310 in this state, nitrogen plasma is generated in the plasma generation space P. The supply pipe 370 may be connected to a water supply source (water tank or the like) (not shown) to supply water into the housing 301 as necessary.

The exhaust pipe 360 exhausts the gas inside the housing 301 to adjust the atmospheric pressure inside the housing 301. The exhaust pipe 360 has a pressure-adjusting valve 340. The amount of exhaust from the exhaust pipe 360 is adjusted by the pressure-adjusting valve 340.

The stirring fins 320 are connected to a rotating motor 321 via a rotating shaft 322. When the rotating motor 321 operates, rotation is transmitted to the stirring fins 320 via the rotating shaft 322, and the stirring fins 320 rotate. Although two stirring fins 320 are shown, the present invention is not limited to this, and any number of stirring fins 320 can be installed. The stirring fins 320, the rotating shaft 322, and the rotating motor 321 together with the baffle plate 330 constitute a mixing mechanism for mixing the organic fertilizer F.

The baffle plate 330 is installed on the inner wall of the housing 301. The baffle plate 330 improves the stirring efficiency of the organic fertilizer F by the stirring fins 320. Although two baffle plates 320 are shown, the present invention is not limited to this, and any number of baffle plates 330 can be installed.

An example of the operation of the apparatus for manufacturing an organic fertilizer 300 having the configuration as described above will be described.

First, the lid 302 is opened and the organic fertilizer F is put into the housing 301. After the input, the lid 302 is closed to hermetically seal the housing 301.

Next, a nitrogen-containing gas is supplied into the housing 301 from the supply pipe 370. When the water content of the organic fertilizer F is low, water may be supplied from the supply pipe 370. At this time, the gas in the housing 301 is exhausted from the exhaust pipe 360 while adjusting the exhaust amount of exhaust by the pressure-adjusting valve 340 as necessary. As a result, the inside of the housing 301 is adjusted to a desired atmospheric pressure.

Next, the rotating motor 321 is driven to rotate the stirring fins 320. Thereby, the organic fertilizer F is stirred. Here, when the plasma-generating electrode 310 is applied, nitrogen plasma is generated in the plasma generation space P, and the organic fertilizer F is irradiated with the nitrogen plasma. At this time, the ionized nitrogen molecules in the nitrogen plasma react with water (H₂O) in the organic fertilizer F to generate nitrogen compounds such as inorganic nitrogen compounds (ammonia, nitric acid, nitrous acid, ions thereof, and the like) and organic nitrogen compounds (urea, ions thereof, and the like). The generated nitrogen compound remains in the organic fertilizer F, and the nitrogen content of the organic fertilizer F is enriched.

By stirring and mixing the organic fertilizer F with the stirring fins 320, the nitrogen compound concentration in the organic fertilizer F becomes uniform.

The application time of the plasma-generating electrode 310 is not particularly limited, and may be appropriately set according to the types of the organic fertilizer F and the plasma-generating electrode 310. Further, the nitrogen content of the organic fertilizer F may be monitored over time, and the application of the plasma-generating electrode 310 may be stopped when the nitrogen content reaches an appropriate level. When the application to the plasma-generating electrode 310 is stopped, the rotating motor 321 is stopped and the rotation of the stirring fins 320 is stopped. Alternatively, after a certain amount of time has passed since the application to the plasma-generating electrode 310 is stopped, the rotating motor 321 is stopped and the rotation of the stirring fins 320 is stopped.

Next, by opening the lid 302 and taking out the organic fertilizer F, the nitrogen-enriched organic fertilizer can be obtained.

The apparatus for manufacturing an organic fertilizer of the present embodiment can be suitably used in the method for manufacturing a nitrogen-enriched organic fertilizer according to the above embodiment. By using the apparatus for manufacturing an organic fertilizer of the present embodiment, a nitrogen-enriched organic fertilizer can be easily manufactured.

As described above, the embodiments of the present invention have been described in detail with reference to the drawings, but the specific configuration is not limited to these embodiments, and designs and the like are included within the scope of the present invention.

### [Examples]

Hereinafter, the present invention will be described based on Examples, but the present invention is not limited to the following Examples.

### [Manufacture of organic fertilizer]

### <Example 1>

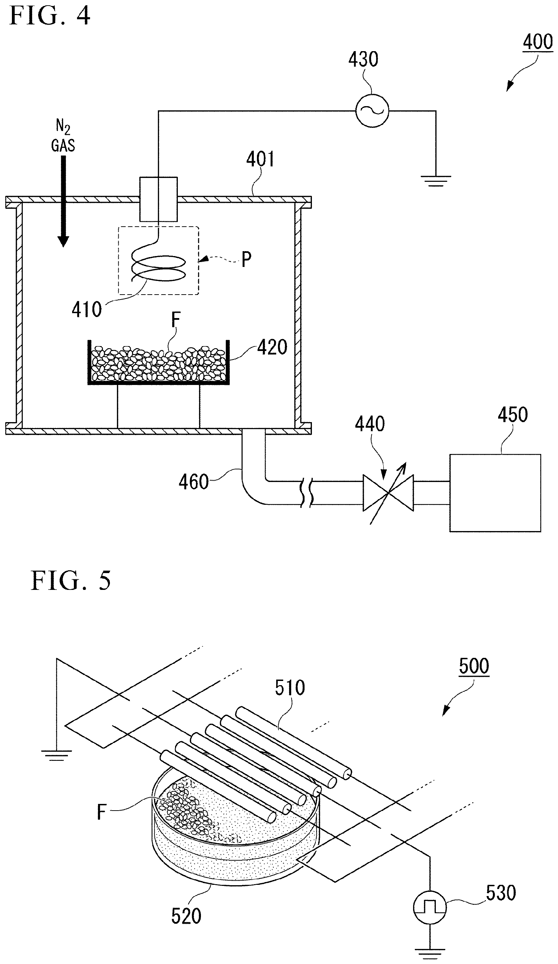

Nitrogen plasma treatment of organic fertilizer was performed using an apparatus for manufacturing an organic fertilizer 400 equipped with a low-pressure plasma generation device (custom-order product, a self-made plasma source was installed in a reaction vessel manufactured by Kenix Co., Ltd.) shown in FIG. 4. Humus was used as an organic fertilizer. 4 g of humus was put into the chamber of the plasma generation device, and nitrogen plasma was generated while supplying nitrogen gas. The supply amount of nitrogen gas was set to 0.5 mL/min. The conditions for plasma generation were atmospheric pressure of 200 Pa, frequency of 143000 kHz, and power of 40 W. The nitrogen plasma treatment time was 3 minutes.

The apparatus for manufacturing an organic fertilizer 400 includes a plasma-generating electrode 410 connected to a power supply 430 and an organic fertilizer-holding container 420 in a housing 401. In addition, an exhaust pipe 460, a pressure-adjusting valve 440, and an exhaust rotary pump 450 are provided for exhausting the gas in the housing 401 and keeping the housing 401 at a low pressure. A pulse power supply or a high-frequency power supply was used for the power supply 430. While supplying nitrogen gas from a nitrogen supply passage (not shown), nitrogen gas was applied to the plasma-generating electrode 410 to generate nitrogen plasma in the plasma generation space P, and the organic fertilizer F in the organic fertilizer-holding container 420 was irradiated.

### <Example 2>

Nitrogen plasma treatment of organic fertilizer was performed using an apparatus for manufacturing an organic fertilizer 500 (self-made product) equipped with a dielectric barrier discharge (DBD) plasma generation device shown in FIG. 5. Humus was used as an organic fertilizer. 4 g of humus to which 4 g of pure water was added was put into the chamber of the plasma generation device, and nitrogen plasma was generated while supplying nitrogen gas. Irradiation was performed in an air gas atmosphere. The conditions for plasma generation were atmospheric pressure, frequency of 14 kHz, and voltage of 7 kV. The nitrogen plasma treatment time was 10 minutes.

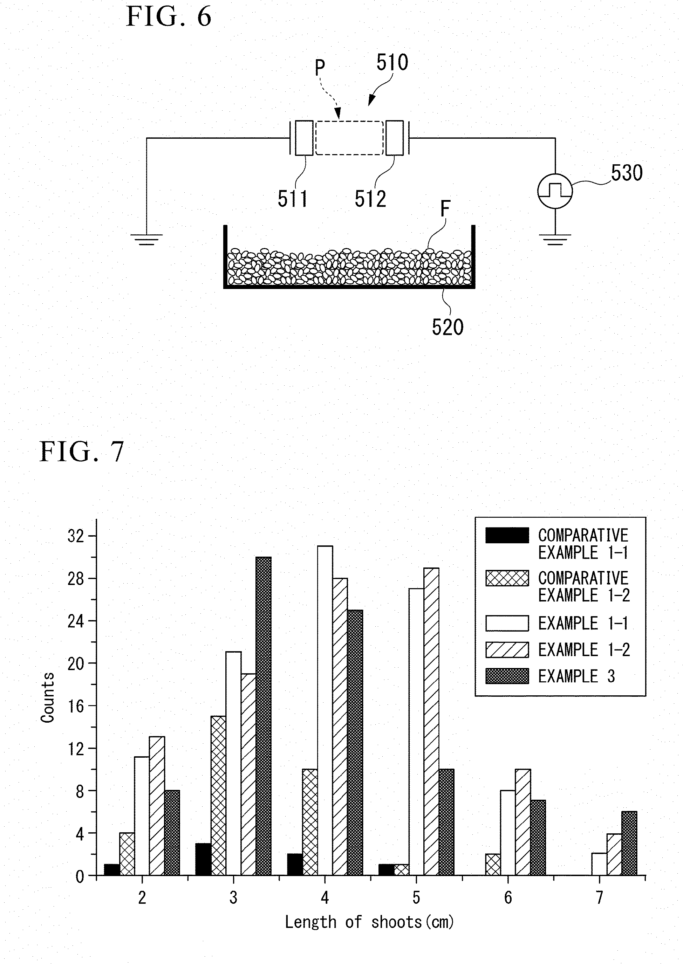

The apparatus for manufacturing an organic fertilizer 500 includes a plasma-generating electrode 510 connected to a power supply 530 and an organic fertilizer-holding container 520. A high-voltage power supply was used for the power supply 530. A principle diagram of the apparatus for manufacturing an organic fertilizer 500 is shown in FIG. 6. The plasma-generating electrode 510 is composed of a pair of dielectrics 511 and 512. While supplying nitrogen gas from the nitrogen supply passage (not shown), nitrogen plasma was generated in the plasma generation space P by applying nitrogen gas to the dielectrics 511 and 512, and the organic fertilizer F in the organic fertilizer-holding container 520 was irradiated.

### <Example 3>

Nitrogen plasma treatment of organic fertilizer was performed by the same method as in Example 1, except that the nitrogen plasma irradiation time was set to 10 minutes.

### <Comparative Example 1>

Humus without nitrogen plasma treatment was used as an organic fertilizer in Comparative Example 1.

### [Measurement of nitrogen compounds]

The nitric acid (NO₃⁻) concentration and nitrous acid (NO₂⁻) concentration in the humus were measured. The measurement method is as follows.

Approximately 1 g of the organic fertilizer treated in each of the above examples was collected, and approximately 1 cc of water was added thereto. The solution was collected by squeezing the organic fertilizer, and small dust was removed by a filter. NO₂/NO₃ Assay Kit-C II (DOJINDO) was used to measure concentrations of nitric acid and nitrous acid.

Table 1 shows the measurement results of nitric acid. Table 2 shows the measurement results of nitrous acid.

**[Table 1]**

| | Plasma treatment | Nitric acid (NO₃⁻) concentration (µmol/L) | Increase amount compared to Comparative Example 1 (µmol/L) |
|---|---|---|---|
| Example 1 | Low-pressure plasma (treatment time: 3 minutes) | 270 | 57 |
| Example 2 | DBD plasma (treatment time: 10 minutes) | 327 | 114 |
| Comparative Example 1 | Not plasma-treated | 213 | |

**[Table 2]**

| | Plasma treatment | Nitrous acid (NO₂⁻) concentration (µmol/L) | Increase amount compared to Comparative Example 1 (µmol/L) |
|---|---|---|---|
| Example 1 | Low-pressure plasma (treatment time: 3 minutes) | 33 | 21 |
| Example 2 | DBD plasma (treatment time: 10 minutes) | 18 | 6 |
| Comparative Example 1 | Not plasma-treated | 12 | |

From the results shown in Tables 1 and 2, it was confirmed that, in Examples 1 and 2, the nitric acid concentration and the nitrous acid concentration were higher than in Comparative Example 1. From these results, it was shown that, by performing the nitrogen plasma treatment, it was possible to manufacture nitrogen-enriched organic fertilizer.

### [Germination test]

42 g of the organic fertilizer of Example 1 or Comparative Example 1 was applied to a 1 L cultivation pot. Then, 2.1 g of white radish sprout seeds were uniformly sown in the cultivation pot. The number of cultivation pots was three for each organic fertilizer. Cultivation temperature was controlled at 25°C, and watering was performed twice a day. Five days after sowing, the number of seeds germinating was counted and the germination rate was calculated.

In the cultivation pots fertilized with the organic fertilizer of Example 1, the germination rate was 85 to 95%. On the other hand, in the cultivation pots fertilized with the organic fertilizer of Comparative Example 1, the germination rate was 50 to 65%. From these results, it was shown that the germination rate was improved by using nitrogen plasma-treated organic fertilizer.

### [Cultivation test of white radish sprouts]

Using the organic fertilizers of Example 1, Example 3, and Comparative Example 1, a cultivation test of white radish sprouts was conducted. White radish sprouts were sown and cultivated by the same method as in the above germination test, except that the organic fertilizer of Example 1, Example 3, or Comparative Example 1 was used. The number of cultivation pots is two in Example 1 (Examples 1-1 and 1-2), one in Example 3, and two in Comparative Example 1 (Comparative Example 1-1, Comparative Example 1-2). The shoot length was measured 5 days after seeding. Each of the shoot lengths of 2 cm (1.5 cm or more and less than 2.5 cm), 3 cm (2.5 cm or more and less than 3.5 cm), 4 cm (3.5 cm or more and less than 4.5 cm), 5 cm (4.5 cm or more and less than 5.5 cm), 6 cm (5.5 cm or more and less than 6.5 cm), and 7 cm (6.5 cm or more and less than 7.5 cm) were counted. The results are shown in FIG. 7.

As shown in FIG. 7, in the cultivation pots fertilized with the organic fertilizer of the example, the counted numbers were generally larger than in the cultivation pots fertilized with the organic fertilizer of the comparative example. This is probably because the germination rate was improved in the cultivation pots fertilized with the organic fertilizer of the example.

The shoot length tended to be longer with the organic fertilizer of the example than with the organic fertilizer of the comparative example. In addition, between Example 1 and Example 3, the shoot length in Example 1 tended to be longer.

These results indicated that the use of nitrogen plasma-treated organic fertilizers improved plant growth.

### [Industrial Applicability]

According to the present invention, a method and an apparatus for manufacturing a nitrogen-enriched organic fertilizer are provided. In addition, a method for cultivating a plant and a method for improving soil using the organic fertilizer manufactured by the manufacturing method are provided.

Although the preferred embodiments of the present invention have been described and shown above, it is to be understood that they are intended to be illustrative of the present invention and should not be taken as limiting. Additions, omissions, substitutions, and other changes can be made without departing from the spirit or scope of the invention. Accordingly, the present invention should not be viewed as being limited by the above description, but only by the scope of the appended claims.

### [Reference Signs List]

100, 200, 300, 400, 500 Apparatus for manufacturing organic fertilizer
101, 201, 301, 401 Housing
110, 210, 310, 410, 510 Plasma-generating electrode
120 Upper belt conveyor
121, 131, 141, 231 Endless belt
130 Lower belt conveyor
122, 123, 132, 133, 232, 233 Roller
140 Bucket conveyor
142 Bucket
220 Rotating body
221 Plate
230 Flight conveyor
234 Flight
240 Tank
241 Opening portion
302 Lid
311 Electric wire
312 Electric wire insertion unit
320 Stirring fin
321 Rotating motor
322 Rotating shaft
330 Baffle plate
370 Supply pipe
371 Exhaust port
420, 520 Organic fertilizer-holding container
430, 530 Power supply
340, 440 Pressure adjusting valve
450 Exhaust rotary pump
360, 460 Exhaust pipe
511, 512 Dielectric

## Claims

1. A method for manufacturing a nitrogen-enriched organic fertilizer, comprising:
a step of treating an organic fertilizer with nitrogen plasma.

2. The method according to Claim 1,
wherein the enriched nitrogen content is at least one selected from the group consisting of ammonia, nitric acid, nitrous acid, urea, and ions thereof.

3. The method according to Claim 1 or 2,
wherein the organic fertilizer contains vegetable compost.

4. A method for cultivating a plant, comprising:
a step of manufacturing a nitrogen-enriched organic fertilizer by the method according to any one of Claims 1 to 3; and
a step of cultivating a plant in soil fertilized with the nitrogen-enriched organic fertilizer.

5. A method for improving soil, comprising:
a step of manufacturing a nitrogen-enriched organic fertilizer by the method according to any one of Claims 1 to 3; and
a step of fertilizing the soil with the nitrogen-enriched organic fertilizer.

6. An apparatus for manufacturing a nitrogen-enriched organic fertilizer, comprising:
a plasma generation device;
a nitrogen-containing gas supply unit configured to supply nitrogen-containing gas to a plasma generation space of the plasma generation device; and
an organic fertilizer-holding unit configured to hold an organic fertilizer,
wherein the organic fertilizer held by the organic fertilizer-holding unit is irradiated with nitrogen plasma generated by the plasma generation device.

7. The apparatus for manufacturing a nitrogen-enriched organic fertilizer according to Claim 6, further comprising:
a mixing mechanism configured to mix the organic fertilizer.
